# EUROPÄISCHE PATENTSCHRIFT

(11) **EP 2 539 163 B1**
(45) Veröffentlichungstag und Bekanntmachung des Hinweises auf die Patenterteilung: **17.06.2015**
(21) Anmeldenummer: 11706200.0
(22) Anmeldetag: 16.02.2011
(51) Int. Cl.: B60C 29/02

(54) **REIFENVENTIL**
TIRE VALVE
VALVE DE PNEUMATIQUE

(30) Priorität: 24.02.2010 DE 202010000254 U
(43) Veröffentlichungstag der Anmeldung: 02.01.2013
(73) Patentinhaber: PTG Reifendruckregelsysteme GmbH, 41468 Neuss (DE)
(72) Erfinder: TIGGES, Bertram, 51089 Köln (DE)
(74) Vertreter: Haverkamp, Jens
(86) Internationale Anmeldenummer: PCT/EP2011/052262
(87) Internationale Veröffentlichungsnummer: WO 2011/104148

(56) Entgegenhaltungen:
- EP-A2- 1 182 061
- WO-A1-99/37492
- DE-U1-202006 012 729

## Beschreibung

Die Erfindung betrifft ein Reifenventil, umfassend einen, einen Ventilkanal mit einem Ventilsitz einfassenden Ventilkörper, ausgestattet mit wenigstens einem Anschlussmittel zum Anschließen des Ventilkörpers an einen Ventilfuß und umfassend ein in den Ventilkanal eingesetztes und darin in axialer Richtung bewegbares Ventilteil, das in der Geschlossen-Stellung des Ventils abgedichtet an dem Ventilsitz des Ventilkörpers anliegt, wobei das Anschlussmittel des Ventilkörpers in axialer Richtung beabstandeten Anschlussabschnitt angeordnet ist und dass der Ventilkörper einstückig ausgeführt ist.

Reifenventile für Fahrzeuge sind als Felgenventile oder als Schlauchventile ausgeführt. Da Kraftfahrzeugreifen zumeist schlauchlos benutzt werden, werden bei Kraftfahrzeugfelgen zumeist Felgenventile eingesetzt. Derartige Ventile, Gleiches gilt jedoch auch für Schlauchventile, umfassen einen Ventilfuß, der im Falle eines Felgenventils abgedichtet mit der Felge verschraubt ist. Der Felgenfuß umfasst einen ringzylindrischen Tubusabschnitt mit einem Außengewinde. Das Außengewinde kann in zwei Abschnitte unterteilt sein, einen Gewindeabschnitt zum Festsetzen des Ventilfußes an der Felge und einen weiteren Gewindeabschnitt zum Aufschrauben einer Ventilkappe zum Verschließen des Ventils. Darüber hinaus verfügt der Tubus über ein Innengewinde zum Festsetzen des eigentlichen Ventils. Das Ventil verfügt über einen Ventilkörper mit einem als Anschlussgewinde ausgeführten Anschlussmittel zum Anschließen des Ventilkörpers an den Ventilfuß dienende Außengewinde, mit dem dieses in den Tubus des Ventilfußes eingeschraubt wird. Der Ventilkörper verfügt über einen diesen in axialer Richtung durchgreifenden Ventilkanal und stellt für ein in dem Ventilkanal in axialer Richtung bewegbares Ventilteil einen Ventilsitz zur Verfügung. In der Geschlossen-Stellung des Ventils wirkt dieses mit seiner Dichtfläche gegen den Ventilsitz des Ventilkörpers. Das Ventilteil verfügt über einen Stift, der über den Ventilkörper hinaus bis in den Bereich der oberseitigen Öffnung des Tubus des Ventilfußes ragt. Durch Eindrücken des Stiftes in den Ventilkörper wird das Ventilteil von dem Ventilsitz abgehoben, sodass dann Luft aus den Reifen abgelassen werden kann. Abgehoben wird das Ventilteil von seinem Ventilsitz auch beim Zuführen von Luft, wenn an den Tubus des Ventilfußes eine Klemmkupplung angeschlossen ist.

Auch wenn sich die Funktionsweise eines solchen Ventils bewährt hat, wäre es für manche Anwendungen wünschenswert, wenn der Vorgang des Änderns des Luftdruckes in einem Reifen rascher erfolgen könnte. Dieses gilt insbesondere beim Ablassen von Luft. Benötigt wird eine solche Anwendung bei Fahrzeugen, die auf unterschiedlichem Untergrund gefahren werden. Mitunter ist es notwendig, zur Vergrößerung der Reifenaufstandsfläche etwa zum Befahren eines weicheren Untergrundes den Luftdruck im Reifen zu erniedrigen. Dieses erfolgt herkömmlich durch Eindrücken des dem Ventilteil des Reifenventils zugeordneten Stiftes, entweder manuell oder durch Anschließen eines Manometers oder eines einer fahrzeugseitigen Regelanlage zugehörigen Schlauches. Zum Anschließen eines solchen Manometers oder eines solchen Schlauches wird ein Kupplungsstück auf das Gewindeende des Tubus des Ventilfußes aufgeklemmt. Teil der Kupplung ist ein Betätigungsstift, der auf den Stift des Ventilteils zum Öffnen des Ventils wirkt. Bei Verwendung derartiger Kupplungen zum Anschließen eines Manometers oder eines Schlauches auf ein Reifenventil ist die Verklemmung mit Sorgfalt herbeizuführen, da ansonsten die Klemmkupplung, gerade bei höheren Luftdrücken, abspringen kann. Kupplungen, die auf das Außengewinde des Tubus zur Vermeidung dieser Problematik aufgeschraubt werden, werden als umständlich in der Handhabung angesehen.

Reifenventile gemäß dem Oberbegriff des Anspruchs 1 sind aus DE 20 2006 012 729 U1, WO 99/37492 A1 oder EP 1 182 061 A2 bekannt. Bei dem in DE 20 2006 012 729 U1 beschriebenen Reifenventil wird ein elastomerer Ringkörper verwendet, gegen den das bewegliche Ventilteil zum Öffnen zu bewegen ist und durch welches dieses gegen den Ventilsitz wirkend gehalten ist. In Folge der notwendigen Größe eines solchen Rückstellelementes ist die freie durchströmbare Querschnittsfläche bei geöffnetem Ventil beschränkt.

Ausgehend von diesem diskutierten Stand der Technik liegt der Erfindung daher die Aufgabe zugrunde, ein eingangs genanntes Reifenventil dergestalt weiterzubilden, dass mit diesem nicht nur ein rascheres Luftablassen aus einem Reifen möglich ist und grundsätzlich auch eine Kupplung sicher angeschlossen werden kann, sondern dass sich ein solches Reifenventil insbesondere auch für kleinere Reifen eignet.

Diese Aufgabe wird erfindungsgemäß durch ein eingangs genanntes, gattungsgemäßes Reifenventil gelöst, bei dem das Anschlussmittel in einem von dem Ventil funktionalen Abschnitt des Ventilkörpers in *axialer* Richtung beabstandeten Anschlussabschnitts angeordnet ist und dass der Ventilkörper einstückig ausgeführt ist.

Bei diesem Ventil befindet sich das Anschlussmittel, welches typischer Weise als Anschlussgewinde ausgeführt ist, nicht in einer radialen Anordnung zu den für die Funktionsweise des Ventils notwendigen Elementen, wie dem Ventilsitz und dem beweglichen Ventilteil, sondern in einem axial zu diesen Elementen versetzt angeordneten Anschlussabschnitt. Damit befindet sich der Ventilkörper mit seinen ventilfunktionalen Elementen mit Abstand von dem Ende des Tubus des Ventilfußes. Die räumliche Trennung zwischen Anschlussabschnitt und den ventilfunktionalen Elementen des Reifenventils in axialer Richtung gestattet es, die ventilfunktionalen Elemente außerhalb des Tubus des Ventilfußes anzuordnen, mithin an einer Stelle, die in radialer Richtung nicht durch die lichte Weite des Tubus des Ventilfußes beeinträchtigt ist. Folglich kann ein solches Reifenventil einen Ventilkanal größeren Durchmessers und ein mit einem entsprechend größeren Durchmesser konzipiertes Ventilteil aufweisen. Der größere Durchmesser des Ventilkanales bedingt einen größeren Strömungsquerschnitt bei geöffnetem Ventil und damit ein rascheres Ablassen von Luft aus dem Reifen sowie ein rascheres Zuführen von Luft in den Reifen. Infolge der Anordnung des Ventilkörpers mit seinen ventilfunktionalen Elementen außerhalb des Tubus des Ventilfußes gestattet eine den Anforderungen entsprechende Ausgestaltung des Ventilkörpers, und zwar unabhängig von den ansonsten vorhandenen Begrenzungen des Tubus des Ventilfußes. Der Ventilkörper kann beispielsweise eine umlaufende Verklammerungsnut und/oder andere Verbindungselemente zum Anschließen der Kupplung eines Schlauches oder Manometers aufweisen. Der Anschluss einer Kupplung an das Ventil kann daher formschlüssig erfolgen, insbesondere ohne ein notwendiges Verschrauben des Kupplungsstückes auf ein Gewinde.

Der Ventilkörper dieses Reifenventils ist zudem einstückig ausgeführt. Die einstückige Ausgestaltung des Ventilkörpers erlaubt diesen mit einem geringen Materialeinsatz herzustellen und dennoch den an den Ventilkörper gestellten Festigkeitsanforderungen zu genügen. In Folge des geringen Materialeinsatzes weist ein solches Reifenventil nur ein relativ geringes Gewicht auf und eignet sich daher zur Verwendung auch bei kleineren Reifen, wie beispielsweise solchen für Personenkraftwagen. Gerade bei Personenkraftwagen, insbesondere wenn diese auch geländegängig sind, wie etwa SUVs können derartige Reifenventile eingesetzt werden, auch wenn die Reifen derartiger Fahrzeuge höheren Rotationsgeschwindigkeiten standhalten müssen als beispielsweise Lkw-Reifenventile. Die vorbeschriebene Trennung des ventilfunktionalen Abschnittes und des das Anschlussmittel umfassenden Abschnittes in axialer Richtung voneinander erlaubt eine schlanke Ausgestaltung, die Vorraussetzung für einen möglichst geringen Materialeinsatz und damit für ein möglichst geringes Gewicht des Reifenventils ist.

Grundsätzlich kann das als Anschlussgewinde vorzugsweise ausgeführte Anschlussmittel des Ventilkörpers als Außen- oder Innengewinde konzipiert sein. Ist ein möglichst großer durchströmbarer Querschnitt durch den Ventilkanal gewünscht, wird man das Anschlussgewinde des Ventilkörpers als Innengewinde konzipieren, sodass der Ventilkörper auf das Außengewinde des Tubus eines Ventilfußes aufgeschraubt werden kann. Ein solches Reifenventil wird sodann wie eine herkömmliche Schutzkappe auf den Tubus des Ventilfußes aufgeschraubt und verlängert diesen entsprechend. Die Verbindung des Ventilkörpers mit seinem Anschlussmittel an den Ventilfuß erfolgt in einer Art und Weise, dass dieses abgedichtet ist. Bei der Verwendung eines erfindungsgemäßen Reifenventils kann dieses, da das Ventilteil nicht, zumindest nicht insgesamt, in dem Tubus des Ventilfußes aufgenommen werden muss, insgesamt kürzer bemessen sein.

Infolge des relativ großen zur Verfügung stehenden Bauraumes innerhalb des Ventilkanals kann dieser Einbauten aufweisen. Hierbei kann es sich beispielsweise um eine Anschlagfläche zum Begrenzen der Bewegung des Ventilteils in Schließrichtung handeln. Dementsprechend verfügt das Ventilteil über einen komplementären Anschlag, wobei diese Anschlagsflächen vorzugsweise als umlaufende radiale Vorsprünge ausgebildet sind, die in Richtung zur Längsachse und zur Ventilöffnung hin geneigt sein können. Durch Vorsehen eines solchen Anschlages wird an dem Ventilsitz in der Geschlossen-Stellung des Reifenventils, wenn der Dichtring als Teil des Ventilteils an dem Ventilsitz anliegt, der elastomere Dichtring maximal nur so stark verformt, wie dieses durch den vorbeschriebenen Bewegungsanschlag ermöglicht ist, bevor die beiden Anschlagflächen aneinander anliegen. Durch diese Maßnahme wird das eingesetzte Dichtelement geschont. Dabei versteht es sich, dass der Effekt nicht nur eintritt, wenn das Dichtelement Teil des beweglichen Ventilteils ist, sondern auch, wenn ein eingesetztes Dichtelement den gegenüber dem Ventilteil feststehenden Ventilkörper zugeordnet ist.

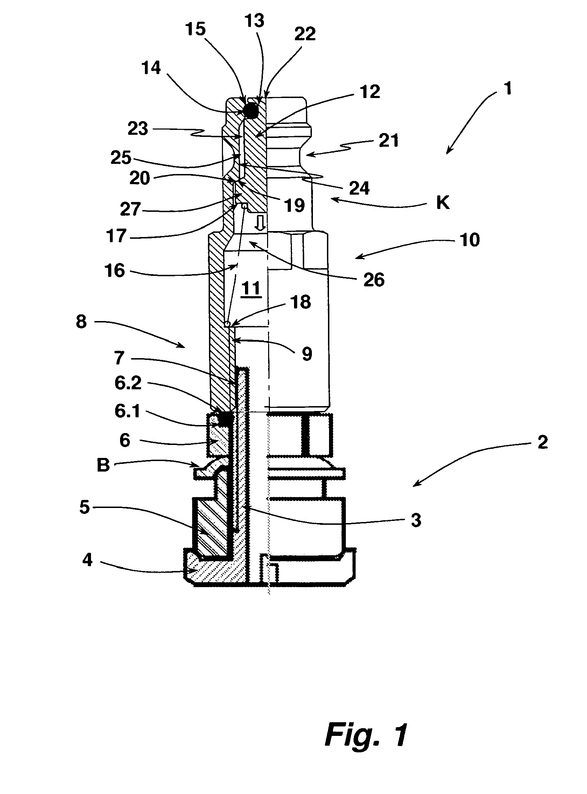

Weitere Vorteile und Ausgestaltungen der Erfindung ergeben sich aus der nachfolgenden Beschreibung eines Ausführungsbeispiels unter Bezugnahme auf die beigefügte Figur 1. Figur 1 zeigt einen Teillängsschnitt durch ein Reifenventil 1, das bei dem dargestellten Ausführungsbeispiel an einen zum Montieren an einer Fahrzeugfelge konzipierten Ventilfuß 2 angeschlossen ist. Bei dem Ventilfuß 2 handelt es sich um einen Ventilfuß mit einem, einen Längskanal aufweisenden Tubus 3, einem Anschlussflansch 4, einer Schulterdichtung 5 sowie einer Montagemutter 6 zum Verspannen des Ventilfußes 2 an dem Felgenbett eines Fahrzeugreifens unter Zwischenschaltung einer Beilagscheibe B. Der Tubus 3 trägt an seinem dem Anschlussflansch 4 gegenüberliegenden Ende ein Außengewinde 7. Der von dem Tubus 3 gebildete Kanal dient zum Herstellen einer Wegsamkeit zwischen dem Inneren eines auf eine Felge montierten Reifens und der Umgebung. Die Montagemutter 6 ist als Nutmutter ausgeführt und verfügt über eine ringförmig umlaufende Ausnehmung 6.1, in die ein O-Ring 6.2 aus einem elastomeren Material eingesetzt ist. Der Durchmesser des O-Ringes 6.2 ist so bemessen, dass dieser in seinem in axialer Richtung entspannten Zustand über der von der Beilagscheibe B wegweisende Fläche der Montagemutter 6 übersteht.

Das Reifenventil 1 verfügt über einen Anschlussabschnitt 8 mit einem zu dem Außengewinde 7 des Tubus 3 komplementären Innengewindes 9 als Anschlussmittel zum Anschließen des Reifenventils 1 an den Ventilfuß 2. Das Reifenventil 1 ist mit seinem Innengewinde 9 auf den Tubus 3 aufgeschraubt. Der Anschlussabschnitt 8 des Reifenventils 1 ist Teil des Ventilkörpers 10 des Reifenventils 1. An den Anschlussabschnitt 8 des Ventilkörpers 10 angrenzend, befindet sich ein Kupplungsabschnitt mit den ventilfunktionalen Elementen des Reifenventils 1. Der Ventilkörper 10 ist einstückig hergestellt, typischer Weise im Wege eines oder mehrerer spanender Bearbeitungsschritte. Der Ventilkörper 10 schließt innerhalb seines Kupplungsabschnittes K einen Ventilkanal 11 als Fortsetzung des von dem Tubus 3 des Ventilfußes 2 eingefassten Kanals ein. In dem Ventilkanal 11 des Ventilkörpers 10 ist ein in längsaxialer Richtung bewegbares Ventilteil 12 angeordnet. Dargestellt in Figur 1 ist das Ventilteil 12 in seiner Geschlossenstellung. Die Öffnungsbewegung des Ventilteils 12 ist mit einem Blockpfeil kenntlich gemacht. Das Ventilteil 12 trägt an seinem von dem Anschlussabschnitt 8 wegweisenden Endbereich in einer Nut 13 einen Dichtring 14, der bei dem dargestellten Ausführungsbeispiel als O-Ring aus einem elastomeren Material ausgeführt ist. Der Dichtring 14 liegt in der Geschlossenstellung an einem von dem Ventilkörper 10 bereitgestellten Ventilsitz 15 abgedichtet an. Das Ventilteil 12 ist in seiner Geschlossen-Stellung, wie in Figur 1 gezeigt, durch die Kraft einer Druckfeder 16 gehalten. Die Druckfeder 16 ist als konische Feder ausgeführt und stützt sich mit seinen verjüngtem Ende an einem an der zum Anschlussabschnitt 8 weisenden Seite des Ventilteils 12 befindlichen, als Absatz 17 konzipierten Federsitz und mit seinem anderen Ende an einem am ventilkörperseitigen Ende des Innengewindes 9 vorgesehenen Absatz 18 als ventilkörperseitigen Federsitz ab.

Der Ventilkörper 10 verfügt über eine umlaufende, in Richtung zur Längsachse des Reifenventils 1 und in Richtung zum Ventilsitz 15 hin geneigte Anschlagfläche 19. Das Ventilteil 12 verfügt über eine komplementär konzipierte Anschlagfläche 20. In der Geschlossen-Stellung des Ventilteils 12 liegen beide Anschlagsflächen 19, 20 aneinander an. Hierdurch ist die Bewegbarkeit des Ventilteils 12 in Schließrichtung begrenzt, mit der Folge, dass der Dichtring 14 unabhängig von dem im Reifen herrschenden Druck mit definierter Vorspannung zum Herbeiführen der Abdichtung deformiert wird. Durch die Federvorspannung ist zudem gewährleistet, dass das Reifenventil 1 auch dann geschlossen ist, wenn der Reifen drucklos ist.

Der Ventilkörper 10 weist in dem freien Endbereich seines Kupplungsabschnittes K eine äußere umlaufende Nut 21 auf. Die Nut 21 dient als Anschluss- bzw. Verklammerungsnut für ein an das Reifenventil 1 anzuschließendes Kupplungsstück, etwa eines Manometers oder eines Schlauches einer Reifendruckregelanlage. In die Nut 21 greift ein Klemmelement eines solchen Kupplungsstückes ein, wodurch dieses formschlüssig an das Reifenventil 1 anschließbar ist. In gleicher Weise kann das Reifenventil 1 durch eine in der Nut 21 festgesetzte Kappe verschlossen werden.

Das Ventilteil 12 verfügt an seiner nach außen weisenden Kopfseite über eine Aufnahme 22, die bei dem dargestellten Ausführungsbeispiel als muldenförmige Vertiefung ausgeführt ist. Die Aufnahme 22 dient zur Aufnahme eines Stellgliedes einer an das Reifenventil 1 anzuschließenden Kupplung, durch das das Ventilteil 12 aus seiner in Figur 1 gezeigten Geschlossen-Stellung in Richtung zum Anschlussabschnitt 8 gegen die Kraft der Druckfeder 16 zum Öffnen des Reifenventils 1 bewegt wird.

Zwischen der äußeren Mantelfläche 23 des Ventilteils 12 und der inneren Mantelfläche 24 des Ventilkörpers 10 befindet sich ein Ringspalt 25. Während bei herkömmlichen Reifenventilen, die in das Innengewinde des Tubus eines Ventilfußes eingeschraubt werden, eine lichte durchströmbare Querschnittsweite von etwa 0,5 mm vorhanden ist, beträgt der durchströmbare Durchmesser bei dem in der Figur dargestellten Reifenventil 1 etwa 3,5 bis 4 mm. Erreicht wird dieses zum einen durch das relativ große Spaltmaß des Ringspaltes 25 und durch die Anordnung desselben mit, verglichen zu vorbekannten Ventilen, relativ großem Abstand zu der Längsachse des Ventils 1, wodurch die Breite des Ringspaltes 25 länger und damit die durchströmbare Fläche entsprechend größer ist.

Die Konizität der Druckfeder 16 gewährleistet auch eine Führung des Ventilteils 12, wenn dieses in Richtung zum Anschlussabschnitt 8 zum Öffnen des Reifenventils 1 bewegt wird. In seiner vollständig geöffneten Stellung befindet sich das Ventilteil 12, wenn die Anschlagfläche 20 sich in axialer Position unterhalb eines weiteren Absatzes 26 des Ventilkörpers 10 befindet. Dann befindet sich der die Anschlagfläche 20 und den Absatz 17 für den Federsitz bildende Flansch 27 des Ventilteils 12 mit Abstand zu dem Absatz 26, sodass auch umfänglich bezüglich des Flansches 27 eine hinreichend große durchströmbare Fläche bereitgestellt ist. Soll das Ventilteil 12 zum Öffnen und damit zum Be- und Entlüften eines Reifens nur wenig von dem Ventilsitz 15 abgehoben werden, kann der Flansch 27 Durchbrechungen aufweisen, sodass dieser letztendlich durch einzelne voneinander durch Durchbrechungen beabstandete Flanschsegmente gebildet ist.

Der Durchmesser des Ventilkörpers 10 in dem an die Anschlagfläche 19 angrenzenden Abschnitt des Ventilkanals 11 bis zu dem geneigten Absatz 26, mithin derjenige Abschnitt des Ventilkanals 11, in dem der Flansch 27 in axialer Richtung bewegbar ist, entspricht dem Innendurchmesser des Ventilkörpers 10 im Bereich seines Innengewindes 9. Somit kann das Ventilteil 12, dessen größter Durchmesser durch den Flansch 27 definiert ist, ohne Weiteres durch die durch das Innengewinde 9 bereitgestellte Öffnung des Ventilkörpers 10 eingeschoben werden. Die Druckfeder 16 wird anschließend ebenfalls durch diese Öffnung in den Ventilkörper 10 eingeführt, bis diese mit ihrer im Durchmesser größeren Endwindung auf den Absatz 18 zur Anlage gelangt. Die Abstimmung der Dimensionierung des Durchmessers des Flansches 27 des Ventilteils 10 zu dem Durchmesser des Innengewindes 9, wobei Letzteres lediglich um ein gewisses Spiel zum Einsetzen des Ventilteils 12 größer bemessen sein muss als der Durchmesser des Flansches 27, gewährleistet bei dem dargestellten Ausführungsbeispiel, dass nur ein geringer Materialeinsatz zum Herstellen des Ventilkörpers 10 notwendig ist. Infolge dessen kann der Ventilkörper 10 schlank gehalten werden kann. Mithin braucht dessen Außendurchmesser letztendlich nur eine solche Materialstärke aufzuweisen, damit den mechanischen Anforderungen und den Festigkeitsanforderungen genügt ist.

Der O-Ring 6.2 dient bei auf den Tubus 3 aufgeschraubten Ventilkörper 10 zur Abdichtung gegenüber dem Ventilkörper 10.

Die Beschreibung der Erfindung erfolgte anhand eines Ausführungsbeispieles, welches als Anschlussmittel zum Anschließen des Reifenventils an einen Ventilfuß über ein Anschlussgewinde verfügt. Als Anschlussmittel können auch andere Einrichtungen dienen, insbesondere dann, wenn der Ventilfuß hierauf abgestimmt ist. Beispielsweise kann das Reifenventil an den Ventilfuß auch mittels eines Bajonett-Verschlusses angeschlossen werden. Gleichfalls sind auch andere Anschlussmittel zum Anschließen eines Reifenventils an das Außengewinde eines Zylinderfußes realisierbar, beispielsweise mittels einer Klemme.

### Bezugszeichenliste

- 1: Reifenventil
- 2: Ventilfuß
- 3: Tubus
- 4: Anschlussflansch
- 5: Schulterdichtung
- 6: Montagemutter
- 6.1: Ausnehmung
- 6.2: O-Ring
- 7: Außengewinde
- 8: Anschlussabschnitt
- 9: Innengewinde
- 10: Ventilkörper
- 11: Ventilkanal
- 12: Ventilteil
- 13: Nut
- 14: Dichtring
- 15: Ventilsitz
- 16: Druckfeder
- 17: Absatz
- 18: Absatz
- 19: Anschlagfläche
- 20: Anschlagfläche
- 21: Aufnahme
- 22: Aufnahme
- 23: Mantelfläche
- 24: Mantelfläche
- 25: Ringspalt
- 26: Absatz
- 27: Flansch
- B: Beilagscheibe
- K: Kupplungsabschnitt

## Patentansprüche

1. Reifenventil, umfassend einen, einen Ventilkanal (11) mit einem Ventilsitz (15) einfassenden Ventilkörper (10), ausgestattet mit wenigstens einem Anschlussmittel (9) zum Anschließen des Ventilkörpers (10) an einen Ventilfuß (2) und umfassend ein in den Ventilkanal (11) eingesetztes und darin in axialer Richtung bewegbares Ventilteil (12), das in der Geschlossen-Stellung des Ventils (1) abgedichtet an dem Ventilsitz (15) des Ventilkörpers (10) anliegt, wobei das Anschlussmittel (9) des Ventilkörpers (10) in einem von dem ventilfunktionalen Abschnitt des Ventilkörpers (10) in axialer Richtung beabstandeten Anschlussabschnitt (8) angeordnet ist und dass der Ventilkörper (10) einstückig ausgeführt ist, **dadurch gekennzeichnet, dass** das Ventilteil (12) mittels einer Druckfeder (16) gegen den Ventilsitz (15) wirkend gehalten ist und zum Öffnen des Ventils (1) das Ventilteil (12) gegen die Kraft der Druckfeder (16) zu bewegen ist.

2. Reifenventil nach Anspruch 1, **dadurch gekennzeichnet, dass** das Anschlussmittel als Anschlussgewinde (9) ausgeführt ist.

3. Reifenventil nach Anspruch 2, **dadurch gekennzeichnet, dass** das Anschlussgewinde (9) des Ventilkörpers (10) als Innengewinde, geeignet zum Aufschrauben auf das Außengewinde (7) eines Ventilfußes (2), ausgeführt ist.

4. Reifenventil nach Anspruch 3, **dadurch gekennzeichnet, dass** der Anschlussabschnitt (8) mit seinem Innengewinde Teil eines eine zylindrische Mantelfläche aufweisenden Teils des Ventilkörpers (10) ist.

5. Reifenventil nach Anspruch 4, **dadurch gekennzeichnet, dass** an den Anschlussabschnitt (8) des Ventilkörpers (10) ein Kupplungsabschnitt (K) mit einer Verriegelungskontur (21) zum Anschließen eines Kupplungsstück, etwa eines Manometers oder eines Schlauches einer Reifendruckregeleinrichtung oder einer Schutzkappe angeformt ist.

6. Reifenventil nach einem der Ansprüche 1 bis 5, **dadurch gekennzeichnet, dass** der Ventilkörper (10) innenseitig einen in radialer Richtung nach außen springenden Absatz (18) als ventilkörperseitigen Federsitz aufweist.

7. Reifenventil nach einem der Ansprüche 1 bis 6, **dadurch gekennzeichnet, dass** das Ventilteil (12) einen in der Geschlossen-Stellung gegen den Ventilsitz (15) wirkenden Dichtring trägt.

8. Reifenventil nach Anspruch 6, **dadurch gekennzeichnet, dass** der Ventilkörper (10) eine in radialer Richtung nach innen vorspringende Anschlagfläche (19) und das Ventilteil (12) eine komplementäre nach außen vorspringende Anschlagsfläche (20) aufweist, durch welche beiden Anschlagflächen (19, 20) die Bewegbarkeit des Ventilteils (12) in dem Ventilkörper (10) in Richtung zum Ventilsitz (15) hin begrenzt ist.

9. Reifenventil nach Anspruch 8, **dadurch gekennzeichnet, dass** die Anschlagflächen (19, 20) in Richtung zu der Ventilöffnung sowie zur Längsachse des Ventilkörpers (10) hin geneigt sind.

10. Reifenventil nach Anspruch 8 oder 9, **dadurch gekennzeichnet, dass** die Anschlagflächen (19, 20) dergestalt in Bezug auf die Positionierung und/oder Geometrie von Dichtring (14) und Ventilsitz (15) angeordnet sind, dass diese zur Begrenzung einer Verformung des Dichtringes (14) zur Anlage gelangen.

11. Reifenventil nach einem der Ansprüche 1 bis 10, **dadurch gekennzeichnet, dass** das Ventilteil (12) an seinem von dem Anschlussabschnitt (8) wegweisenden Ende eine Vertiefung (22) zur Aufnahme eines, einer zum Anschließen an das Ventil (1) vorgesehenen Kupplung zugehörigen Stellgliedes zum Öffnen des Ventils (1) eingebracht ist.

## Claims

1. Tyre valve, comprising a valve channel (11) having a valve body (10) enclosing a valve seat (15), having at least one connecting means (9) for connecting the valve body (10) to a valve base (2), wherein the valve body (10) comprises a valve part (12) inserted in the valve channel (11) and displaceable in the axial direction therein, sealingly bearing against the valve seat (15) of the valve body (10) in the closed position of the valve (1), and wherein the connecting means (9) of the valve body (10) is disposed in a connecting segment (8) at a distance in the axial direction from the functional valve segment of the valve body (10), and the valve body (10) is implemented as a single piece **characterised in that** the valve part (12) is held operatively against the valve seat (15) by means of a pressure spring (16) and to open the valve (1) the valve part (12) is to be moved against the force of the pressure spring (16).

2. Tyre valve according to claim 1, **characterised in that** the connecting means are made as a connection thread (9).

3. Tyre valve according to claim 2, **characterised in that** the connection thread (9) of the valve body (10) is made as an internal thread, suitable for screwing onto the external thread (7) of a valve base (2).

4. Tyre valve according to claim 3, **characterised in that** the connecting segment (8) with its internal thread is part of a part of the valve body (10) comprising a cylindrical sleeve surface.

5. Tyre valve according to claim 4, **characterised in that** on the connecting segment (8) of the valve body (10) a coupling segment (K) with a locking contour (21) is formed for connecting a coupling piece, for example a pressure gauge or a hose of a tyre pressure adjustment device or a protective cap.

6. Tyre valve according to any one of claims 1 to 5, **characterised in that** the valve body (10) internally comprises a shoulder (18) protruding outwards in a radial direction, as a spring seat on the valve body side.

7. Tyre valve according to any one of claims 1 to 6, **characterised in that** the valve part (12) supports a sealing ring acting against the valve seat (15) in the closed position.

8. Tyre valve according to claim 6, **characterised in that** the valve body (10) comprises a stop surface (19) protruding inwards in a radial direction, and the valve part (12) comprises a complementary stop surface (20) protruding outwards, wherein the displaceability of the valve part (12) in the valve body (10) in the direction of the valve seat (15) is restricted by the said two stop surfaces (19, 20).

9. Tyre valve according to claim 8, **characterised in that** the stop surfaces (19, 20) are inclined in the direction of the valve opening and relative to the longitudinal axis of the valve body (10).

10. Tyre valve according to claim 8 or 9, **characterised in that** the stop surfaces (19, 20) are disposed in such a way relative to the positioning and / or geometry of the sealing ring (14) and valve seat (15) that they come to rest to limit any distortion of the sealing ring (14).

11. Tyre valve according to any one of claims 1 to 10, **characterised in that**, in the valve part (12) at its end facing away from the connecting segment (8), a recess (22) is introduced to hold an actuator belonging to a coupling provided for connecting to the valve (1) for opening the valve (1).

## Revendications

1. Valve de pneumatique comprenant un corps (10) de valve intégrant un canal (11) de valve avec un siège (15) de valve, équipé d'au moins un moyen de raccordement (9) afin de raccorder le corps (10) de valve à un pied (2) de valve et comprenant une pièce (12) de valve placée dans le canal (11) de valve et mobile dans ce dernier dans le sens axial, qui, en position fermée de la valve (1) s'appuie de façon étanche sur le siège (15) de valve du corps (10) de valve, le moyen de raccordement (9) du corps (10) de valve étant placé dans un tronçon de raccordement (8) situé à distance dans le sens axial du tronçon fonctionnel du corps (10) de valve et le corps (10) de valve étant réalisé d'une seule pièce, **caractérisée en ce que** la pièce (12) de valve est maintenue pour agir contre le siège (15) de valve par un ressort (16) de compression et que pour ouvrir la valve (1), la pièce (12) de valve doit être mobilisée contre la force du ressort (16) de compression.

2. Valve de pneumatique selon la revendication 1, **caractérisée en ce que** le moyen de raccordement est réalisé en tant que filetage (9) de raccordement.

3. Valve de pneumatique selon la revendication 2, **caractérisée en ce que** le filetage (9) de raccordement du corps (10) de valve est réalisé en tant que filetage intérieur, convenant pour permettre le vissage sur le filetage extérieur (7) d'un pied (2) de valve.

4. Valve de pneumatique selon la revendication 3, **caractérisée en ce que** le tronçon de raccordement (8) avec son filetage intérieur fait partie d'une pièce du corps (10) de valve présentant une surface d'enveloppe cylindrique.

5. Valve de pneumatique selon la revendication 4, **caractérisée en ce qu'**un tronçon de couplage (K) avec un contour de verrouillage (21) est moulé sur le tronçon de raccordement (8) du corps (10) de valve afin de raccorder une pièce de couplage, par exemple un manomètre ou un flexible d'une station de gonflage et de régulation de la pression des pneumatiques, ou un capuchon de protection.

6. Valve de pneumatique selon l'une des revendications 1 à 5, **caractérisée en ce que** le corps (10) de valve présente à l'intérieur un décrochement (18) en saillie radiale vers l'extérieur faisant office de siège de ressort du côté corps de valve.

7. Valve de pneumatique selon l'une des revendications 1 à 6, **caractérisée en ce que** la pièce (12) de valve supporte une bague d'étanchéité agissant en position fermée contre le siège (15) de valve.

8. Valve de pneumatique selon la revendication 6, **caractérisée en ce que** le corps (10) de valve présente une surface (19) de butée en saillie vers l'intérieur dans le sens radial et la pièce (12) de valve une surface (20) de butée complémentaire, en saillie vers l'extérieur, lesquelles deux surfaces (19, 20) de butée permettent de limiter la mobilité de la pièce (12) de valve dans le corps (10) de valve par rapport au siège (15) de valve.

9. Valve de pneumatique selon la revendication 8, **caractérisée en ce que** les surfaces (19, 20) de butée sont inclinées vers l'ouverture de la valve tout comme vers l'axe longitudinal du corps de valve (10).

10. Valve de pneumatique selon la revendication 8 ou 9, **caractérisée en ce que** les surfaces (19, 20) de butée sont disposées de telle façon par rapport au positionnement et/ou à la géométrie de la bague d'étanchéité (14) et au siège (15) de valve, que celles-ci viennent en appui afin de limiter une déformation de la bague d'étanchéité (14).

11. Valve de pneumatique selon l'une des revendications 1 à 10, **caractérisée en ce qu'**une cavité (22), destinée à loger un actionneur d'ouverture de la valve (1) faisant partie d'un couplage prévu pour être raccordé à la valve (1), est aménagée sur la pièce (12) de valve, à son extrémité opposée au tronçon (8) de raccordement.
